## Europäisches Patentamt
## European Patent Office
## Office européen des brevets

(19)

(11) Veröffentlichungsnummer: **0 074 051**

**A1**

(12) # EUROPÄISCHE PATENTANMELDUNG

(21) Anmeldenummer: 82107953.0

(22) Anmeldetag: 30.08.82

(51) Int. Cl.$^3$: **C 08 L 25/12**
**C 08 L 51/04, C 08 L 55/02**

(30) Priorität: 05.09.81 DE 3135251

(43) Veröffentlichungstag der Anmeldung:
16.03.83 Patentblatt 83/11

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Brandstetter, Franz, Dr.
Ritterbuechel 45
D-6730 Neustadt(DE)

(72) Erfinder: Benker, Klaus
Fuerstenweg 52
D-6730 Neustadt(DE)

(72) Erfinder: McKee, Graham Edmund, Dr.
Kastanienweg 8
D-6940 Weinheim(DE)

(72) Erfinder: Priebe, Edmund, Dr.
Bensheimer Ring 7A
D-6710 Frankenthal(DE)

(54) **Thermoplastische Formmasse.**

(57) Die Erfindung betrifft eine thermoplastische Formmasse, die aus einer Hartkomponente A und 2 Pfropfmischpolymerisaten B und C besteht, wobei letztere vorzugsweise in Emulsion hergestellt worden sind.

Die Hartkomponente A ist in einem Anteil von 50 bis 90 Gew.%, benzogen auf A + B + C, vorhanden und besteht aus einem oder mehreren Copolymerisaten von Styrol und/oder - Methylstyrol mit Acrylnitril.

Das Pfropfmischpolymerisat B ist in einem Anteil von 5 bis 45 Gew.%, bezogen auf A + B + C, zugegen und wird gebildet aus 40 bis 80 Gew.%, bezogen auf (B), eines Butadienpolymerisates ($B_1$) als Pfropfgrundlage, worauf 20 bis 60 Gew.%, bezogen auf (B), einer Mischung von Styrol und Acrylnitril im Gewichtsverhältnis 75 : 25 bis 65 : 35 aufgepfropft ist ($B_2$).

Das Pfropfmischpolymerisat C ist in einem Anteil von 5 bis 45 Gew.%, bezogen auf A + B + C, vorhanden und repräsentiert 50 bis 85 Gew.%, bezogen auf (C), eines Copolymerisats $C_1$ aus Acrylsäurebutylester und/oder Acrylsäureethylhexylester und Butadien, worauf 15 bis 50 Gew.%, bezogen auf (C), einer Mischung von Styrol und Acrylnitril im Gewichtsverhältnis 75 : 25 bis 65 : 35 aufgepfropft ist ($C_2$).

Die erfindungsgemäße Formmasse kann als weitere Komponente (D) übliche Zusatzstoffe enthalten. Sie wird verwendet zur Herstellung von Formkörpern oder Formteilen.

BASF Aktiengesellschaft                    O.Z. 0050/035390

Thermoplastische Formmasse

Die Erfindung betrifft eine thermoplastische Formmasse aus einer Hartkomponente, vorzugsweise einem S/AN-Copolymerisat, und 2 Pfropfmischpolymerisaten, wovon eines auf Basis von Polybutadien (ABS) und das andere auf Basis Butadien-Acrylatcopolymerisaten aufgebaut ist.

Zum Stand der Technik nennen wir die DE-OS 28 46 754.

Aus dieser sind Mischungen aus ABS-Polymerisaten bekannt, die als Kautschuk Polybutadien bzw. Copolymerisate aus Butadien mit Acrylestern sowie Vinylethern enthalten. Diese Formmassen besitzen zwar eine verbesserte Eigenschaftskombination. Die Zähigkeit ist dabei häufig nicht ausreichend. Außerdem haben sie noch eine deutliche Eigenfarbe.

Es bestand also die Aufgabe, Formmassen zu schaffen, die neben einem allgemein ausgewogenen Eigenschaftsbild eine hohe Zähigkeit und eine verminderte Eigenfarbe besitzen. Diese Aufgabe wird durch die erfindungsgemäße Formmasse gemäß Patentanspruch 1 gelöst.

Nachstehend werden die Komponenten der erfindungsgemäßen Formmasse, deren Herstellung und die Herstellung der Formmasse beschrieben.

Komponente A

Die Komponente A ist in einem Anteil von 50 bis 90 Gew.%, insbesondere von 55 bis 80 Gew.%, bezogen auf A + B + C, in der erfindungsgemäßen Formmasse vorhanden.

Vo/P

Die in der erfindungsgemäßen Formmasse enthaltende Komponente (A) ist eine Hartkomponente aus einem oder mehreren Copolymerisaten von Styrol und/oder α-Methylstyrol mit Acrylnitril. Der Acrylnitril-Gehalt in diesen Copolymerisaten der Hartkomponente (A) soll 20 bis 40 Gew.%, bezogen auf das jeweilige Copolymerisat der Hartkomponente, betragen. Zu dieser Hartkomponente (A) zählen auch wie weiter unten erläutert, die bei der Pfropfmischpolymerisation zur Herstellung der Komponenten (B) und (C) entstehenden freien, nicht gepfropften Styrol/Acrylnitril-Copolymerisate. Je nach den bei der Pfropfmischpolymerisation für die Herstellung der Pfropfmischpolymerisate (B) und (C) gewählten Bedingungen kann es möglich sein, daß bei der Pfropfmischpolymerisation schon ein hinreichender Anteil an Hartkomponente (A) gebildet worden ist. Im allgemeinen wird es jedoch nötig sein, die bei der Pfropfmischpolymerisation erhaltenen Produkte mit zusätzlicher, separat hergestellter Hartkomponente (A) zu mischen.

Bei der separat hergestellten Hartkomponente (A) kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch in Mischung miteinander für die Hartkomponente eingesetzt werden, so daß es sich bei der Hartkomponente (A) der erfindungsgemäßen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponente (A) der erfindungsgemäßen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate tunlichst nicht mehr als 10 Gew.%, vorzugsweise nicht mehr als 5 Gew.%, bezogen auf das Copolymerisat,

voneinander abweichen. Die Hartkomponente (A) der erfindungsgemäßen Massen kann jedoch auch nur aus einem einzigen Styrol/Acrylnitril-Copolymerisat bestehen, nämlich dann, wenn bei den Pfropfmischpolymerisationen zur Herstellung der Komponenten (B) und (C) als auch bei der Herstellung der zusätzlichen, separat hergestellten Hartkomponenten von dem gleichen Monomer-Gemisch aus Styrol und Acrylnitril ausgegangen wird.

Die Hartkomponente (A) kann nach den herkömmlichen Methoden erhalten werden. So kann die Copolymerisation des Styrols und/oder $\alpha$-Methylstyrols mit dem Acrylnitril in Masse, Lösung, Suspension oder wäßriger Emulsion durchgeführt werden. Die Hartkomponente (A) hat vorzugsweise eine Viskositätszahl von 40 bis 100, insbesondere von 50 bis 85 [ml/g].

## Komponente B

Die Komponente B repräsentiert mindestens ein Pfropfmischpolymerisat und ist in einem Anteil von 5 bis 45 Gew.%, insbesondere 5 bis 40 Gew.%, bezogen auf A + B + C, in der Formmasse vorhanden. Sie enthält die Pfropfgrundlage $B_1$ und das Pfropfreis $B_2$ als Bestandteile. Sie ist aufgebaut aus 50 bis 60 Gew.% $B_1$ und 40 bis 50 Gew.% $B_2$, jeweils bezogen auf B.

Die Herstellung des erfindungsgemäßen einzusetzenden Pfropfmischpolymerisats (B) erfolgt in zwei Stufen. Hierzu wird zunächst die Pfropfgrundlage ($B_1$) hergestellt.

Zunächst wird in der Grundstufe ein Kautschuklatex auf herkömmliche Weise hergestellt. Der Grundkautschuk ist durch seine Glastemperatur definiert, die unterhalb von $-40^\circ C$, vorzugsweise unterhalb von $-60^\circ C$ liegen soll.

Als Monomeres wird vorzugsweise Butadien allein verwendet. Da für manche Zwecke Butadien-Styrol bzw. Butadien-Acrylnitril-Kautschuke Vorteile zeigen, können auch Monomeren-Gemische aus Butadien und Styrol bzw. Acrylnitril eingesetzt werden, die vorzugsweise zwischen 99 und 90 Gew.%, bezogen auf das Gemisch, Butadien enthalten.

Die Polymerisation wird, wie üblich, bei Temperaturen zwischen 30 und 90°C durchgeführt. Sie erfolgt in Gegenwart von Emulgatoren, wie z.B. Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 1,0 bis 2,0 Gew.%, bezogen auf die Monomeren, verwendet. Es werden die üblichen Puffersalze, wie Natriumbicarbonat und Natriumpyrophosphat, verwendet.

Ebenso werden die üblichen Initiatoren, wie Persulfate, oder organische Peroxide mit Reduktionsmitteln verwendet, sowie gegebenenfalls Molekulargewichtsregler, wie Mercaptane, Terpene oder dimeres $\alpha$-Methylstyrol, die am Anfang oder während der Polymerisation zugegeben werden. Das Gewichtsverhältnis Wasser zu Monomere liegt vorzugsweise zwischen 2 : 1 und 1 : 1. Die Polymerisation wird so lange forgesetzt, bis mehr als 90 %, vorzugsweise mehr als 96 % der Monomeren polymerisiert sind. Dieser Umsatz ist im allgemeinen nach 4 bis 20 Stunden erreicht. Der dabei erhaltene Kautschuklatex hat eine Teilchengröße, die unterhalb von 0,20 μm, vorzugsweise unter 0,15 μm, liegt. Die Teilchengrößenverteilung solcher Kautschuklatizes ist verhältnismäßig eng, so daß man von einem nahezu monodispersen System sprechen kann.

In einem weiteren Verfahrensschritt wird nun der Kautschuklatex agglomeriert. Dies geschieht z.B. durch Zugabe einer Dispersion eines Acrylesterpolymerisates. Vorzugsweise
werden Dispersionen von Copolymerisaten von Acrylestern
von Alkoholen mit 1 bis 4 Kohlenstoffatomen, vorzugsweise
von Ethylacrylat, mit 0,1 bis 10 Gew.% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders
bevorzugt ist ein Copolymerisat aus 96 % Ethylacrylat und
4 % Methacrylamid. Die Agglomerierdispersion kann gegebenenfalls auch mehrere der genannten Acrylesterpolymerisate
enthalten.

Die Konzentration der Acrylesterpolymerisate in der Dispersion soll im allgemeinen zwischen 3 und 40 Gew.% liegen. Bei der Agglomeration werden 0,2 bis 10, vorzugsweise 1 bis 5, Gewichtsteile der Agglomerierdispersion
auf 100 Teile des Kautschuklatex, jeweils berechnet auf
Feststoffe, eingesetzt. Die Agglomeration wird durch Zugabe der Agglomerierdispersion zum Kautschuk durchgeführt.
Die Geschwindigkeit der Zugabe ist normalerweise nicht
kritisch, im allgemeinen dauert sie etwa 1 bis 30 Minuten
bei einer Temperatur zwischen 20 und 90°C, vorzugsweise
zwischen 30 und 75°C.

Unter den genannten Bedingungen wird nur ein Teil der
Kautschukteilchen agglomeriert, so daß eine bimodale oder
breite Verteilung entsteht. Dabei liegen nach der Agglomeration im allgemeinen mehr als 50, vorzugsweise zwischen
75 und 95 % der Teilchen (Zahlen-Verteilung) im nicht
agglomerierten Zustand vor. Der mittlere Durchmesser der
Kautschukteilchen liegt zwischen 0,20 und 0,5 um, vorzugsweise zwischen 0,26 und 0,35 um. Der erhaltene agglomerierte Kautschuklatex ist verhältnismäßig stabil, so daß er ohne weiteres gelagert und transportiert werden
kann, ohne daß Koagulation eintritt.

Zur Herstellung des Pfropfmischpolymerisats (B) wird
dann in einem zweiten Schritt in Gegenwart des agglomerierten Latex des Butadien-Polymerisats ein Monomeren-Gemisch aus Styrol und Acrylnitril polymerisiert, wobei
das Gewichtsverhältnis von Styrol zu Acrylnitril in dem
Monomeren-Gemisch im Bereich von 75 : 25 bis 65 : 35,
vorzugsweise bei 70 : 30, liegen soll. Es ist vorteilhaft,
diese Pfropfmischpolymerisation von Styrol und Acrylnitril auf das als Pfropfgrundlage dienende Butadien-Polymerisat wieder in wäßriger Emulsion unter den üblichen,
oben aufgeführten Bedingungen durchzuführen. Die Pfropfmischpolymerisation kann zweckmäßig im gleichen System
erfolgen wie die Emulsionspolymerisation zur Herstellung
der Pfropfgrundlage ($B_1$), wobei, falls notwendig, weiterer
Emulgator und Initiator zugegeben werden kann. Das aufzupfropfende Monomeren-Gemisch aus Styrol und Acrylnitril
kann dem Reaktionsgemisch auf einmal, absatzweise in
mehreren Stufen oder vorzugsweise kontinuierlich während
der Polymerisation zugegeben werden. Die Pfropfmischpolymerisation des Gemisch von Styrol und Acrylnitril in
Gegenwart des Butadien-Polymerisats wird so geführt, daß
ein Pfropfgrad von 20 bis 60 Gew.%, vorzugsweise von
25 bis 45 Gew.%, im Pfropfmischpolymerisat (B) resultiert.
Da die Pfropfausbeute bei der Pfropfmischpolymerisation
nicht 100%ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der
Pfropfausbeute bei der Pfropfmischpolymerisation und somit des Pfropfgrades des fertigen Pfropfmischpolymerisats (B) ist jedem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfmischpolymerisation entstehen im allgemeinen etwa 5 bis 15 Gew.%, bezogen auf das Pfropfmischpolymerisat, an freiem, ungepfropftem Styrol/Acrylnitril-Copolymerisat. Der Anteil des Pfropfmischpolymerisats (B) in dem bei der Pfropfmischpolymerisation erhaltenen Polymerisationsprodukt wird nach der weiter unten angegebenen Methode ermittelt.

Die Herstellung derartiger Polymerisate durch Agglomeration wird beispielsweise in der DE-AS 24 27 960 beschrieben. Die erforderliche Teilchengröße von 0,20 bis 0,5 $\mu$m kann jedoch auch ohne Agglomeration auf dem Fachmann bekannte Weise erzeugt werden (Saatlatexfahrweise etc.; vgl. den in der DE-AS 24 27 960 beschriebenen Stand der Technik).

Komponente C

Als Komponente C wird mindestens ein Pfropfmischpolymerisat verwendet. Die Componente C ist in einem Anteil von 5 bis 45 Gew.%, vorzugsweise von 5 bis 30 Gew.%, jeweils bezogen auf die Summe (A + B + C), in der erfindungsgemäßen Formmasse zugegen.

Die Komponente C enthält die Pfropfgrundlage $C_1$ als Bestandteil in Mengen von 50 bis 85 Gew.%, insbesondere von 65 bis 80 Gew.%, (jeweils bezogen auf C) und das Pfropfreis $C_2$ (Menge 100-Pfropfgrundlage).

Die Herstellung der Komponente (C) erfolgt ebenfalls in zwei Stufen. Auch hier wird zunächst ein Copolymerisat ($C_1$) hergestellt, auf das dann in einem zweiten Schritt Styrol und Acrylnitril zur Herstellung des Polymerisates (C) aufgepfropft wird.

0074051

Das Mischpolymerisat ($C_1$) wird durch übliche Polymerisation in wäßriger Emulsion hergestellt. Die Comonomeren, die dieses Mischpolymerisat ($C_1$) bilden, sind Acrylsäurebutylester und/oder Acrylsäureethylhexylester, die in Mengen von 20 bis 80 Gew.% eingesetzt werden und Butadien, das 20 bis 80, vorzugsweise 30 bis 35 Gew.% der Comonomeren ausmacht. Es werden die üblichen Emulgatoren, wie Natriumsalze von Paraffinsulfonsäuren mit 12 bis 18 Kohlenstoffatomen, Arylsulfonate, Natriumsalze von Fettsäuren mit etwa 16 bis 18 Kohlenstoffatomen, Fettalkoholsulfate mit etwa 12 bis 18 Kohlenstoffatomen und ähnliche Emulgatoren in Mengen von etwa 0,1 bis 3 Gew.%, verwendet, und als Polymerisationsinitiatoren werden im allgemeinen radikalbildende Verbindungen, wie Persulfate, Peroxyde oder Hydroperoxyde oder auch Azoverbindungen, verwendet. Falls die Polymerisation, so durchgeführt wird, daß die Teilchengröße des Latex unterhalb von 0,15 /um liegt, muß noch die gewünschte Teilchengröße eingestellt werden. In der nächsten Stufe kann der Latex des Mischpolymerisates ($C_1$) agglomeriert werden. Dies geschieht in analoger Weise, wie es im Falle von ($B_1$) beschrieben wurde. Der mittlere Teilchendurchmesser der Kautschukteilchen liegt oberhalb von 0,25 /um, vorzugsweise zwischen 0,26 und 0,5 /um.

Die Herstellung des Pfropfmischpolymerisates (C) wird dann in einem weiteren Schritt in analoger Weise wie die Herstellung des Pfropfmischpolymerisates (B) in Gegenwart des Butadien-Acrylsäureesterpolymerisates mit einem Monomerengemisch aus Styrol und Acrylnitril vorgenommen. Das Pfropfen erfolgt in analoger Weise, wie bei der Herstellung des Pfropfpolymerisates (B) beschrieben.

0074051

Komponente D

Die erfindungsgemäße Formmasse aus den Komponenten (A), (B) und (C) kann als weitere Komponente (D) alle Zusatzstoffe enthalten, wie sie für ABS-Polymerisate üblich und gebräuchlich sind. Als solche Zusatzstoffe seien beispielsweise genannt: Füllstoffe, weitere verträgliche Kunststoffe, Farbstoffe oder Pigmente, Antistatika, Antioxidantien, Flammschutzmittel und Schmiermittel. Die Zusatzstoffe werden in üblichen und wirksamen Mengen, vorzugsweise in Mengen von 0,1 bis zu insgesamt etwa 30 Gew.%, bezogen auf die Mischung (A + B + B), eingesetzt.

Herstellung der erfindungsgemäßen Formmasse:

Die Mischung der Hartkomponente (A) mit den bei der Pfropfmischpolymerisation zur Herstellung der Komponenten (B) und (C) erhaltenen Produkte zu den erfindungsgemäßen Massen kann so vorgenommen werden, daß ein Teil der Hartkomponente (A) zunächst mit Komponente (B), und der restliche Teil der Hartkomponente (A) zunächst mit der Komponente (C) gemischt wird, worauf anschließend die beiden Teilmischungen (A + B) und (A + C) zusammengegeben und vermischt werden. Es ist aber genauso möglich, zunächst die Komponenten (B) und (C) zu vermischen und in dieses Gemisch aus den beiden Pfropfmischpolymerisaten (B + C) anschließend die separat hergestellte Hartkomponente (A) einzumischen. Vorzugsweise werden dabei die Komponenten (A), (B) und (C) in solchen Mengen und in solchen Verhältnissen miteinander gemischt, daß in der Gesamt- -Mischung (A + B + C) die beiden als Pfropfgrundlage dienenden Butadien- bzw. Butadien-Acrylsäureester-Poly- merisate $(B_1)$ und $(C_1)$ im Gewichtsverhältnis $(B_1)$ : $(C_1)$ von etwa 70 : 30 bis etwa 30 : 70 und insbesondere

von 50 : 50 vorliegen, und weiterhin der Anteil der beiden als Pfropfgrundlage dienenden Polymerisate zusammen $(B_1 + C_1)$ in der gesamten Mischung (A + B + C) 10 bis 35 Gew.%, insbesondere 15 bis 30 Gew.%, bezogen auf die Mischung (A + B + C), ausmacht.

Das Mischen der Komponenten (A), (B) und (C) kann nach jeder beliebigen Weise nach allen bekannten Methoden erfolgen. Wenn die Komponenten z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Mischen der Komponenten (A), (B) und (C) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisationen (Komponenten (B) und (C)) können auch nur teilweise entwässert werden und als feuchte Krümel mit der Hartkomponente (A) vermischt werden, wobei dann während des Vermischens die vollständige Trocknung der Pfropfmischpolymerisate erfolgt.

Es zeigte sich nun, daß die erfindungsgemäßen Formmassen neben einem allgemein ausgewogenen Eigenschaftsbild eine gute Zähigkeit und verringerte Eigenfarbe besitzen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Gehäuse für Haushaltsgeräte, Telefone, Platten, Rohre und Kinderspielzeug verarbeiten. Wie erwähnt, eignen sich die erfindungsgemäßen Massen da-

bei insbesondere zur Herstellung von farbigen Formteilen bzw. Formkörpern der genannten Art, wie sie insbesondere bei Gehäusen für Elektrogeräte, Kinderspielzeug und Möbel Anwendung finden.

Die in den Beispielen und Vergleichsversuchen aufgeführten Produkteigenschaften wurden wie folgt gemessen:

1. Die mittlere Teilchengröße wurde aus der integralen Massenverteilung durch Ultrazentrifugen-Messung bestimmt (W. Scholtan, H. Lange Kollorid Z. und Z. Polymere 250 (1972) 782 bis 796. Unter mittlerer Teilchengröße wird dabei immer der $d_{50}$-Wert verstanden.

2. Die Ermittlung der Pfropfausbeute und somit des Anteils des Pfropfmischpolymerisats in dem bei der Pfropfmischpolymerisation erhaltenen Produkt erfolgte durch Extraktion dieses Polymerisationsproduktes mit Methylethylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) im Methylethylketon unlöslichen Gel. Die Viskositätszahl der Hartkomponenten wurde, wie bereits beschrieben, in Dimethylformamid gemessen.

3. Die Kerbschlagzähigkeit der Massen wurde nach DIN 53 453 an gespritzten Normkleinstäben bei 23°C ermittelt. Die Spritztemperatur für die Normkleinstäbe betrug dabei 250°C.

4. Die Viskositätszahlen wurden in 0,5%iger Lösung in Dimethylformamid als Lösungsmittel bei einer Temperatur von 25°C ermittelt.

5. Der Yellowness Index wurde an bei 250°C spritzgegossenen Platten (50x50x2 mm) bestimmt.

Zur Herstellung erfindungsgemäßer Formmassen wurden die folgenden Komponenten verwendet:

Hartkomponente (A)

Durch kontinuierliche Lösungspolymerisation nach einem Verfahren wie es beispielsweise im Kunststoff-Handbuch, Vieweg-Daumiller, Band V, (Polystyrol), Carl Hanser-Verlag, München 1969, Seite 124, Zeilen 12 ff beschrieben ist, wird ein Copolymerisat, das 65 Teile Styrol und 35 Teile Acrylnitril einpolymerisiert enthält, hergestellt. (Eigenschaften: vgl. Tabelle 1)

Pfropfmischpolymerisat (B)

Durch Polymerisation von 55 Teilen Butadien in Gegenwart einer Lösung von 0,6 Teilen tert-Dodecylmercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 65° ein Polybutadienlatex hergestellt. Nach Beendigung der Reaktion wird der Polymerisationsautoklav entspannt. Der Umsatz betrug 98 %.

Es wird ein Polybutadien erhalten, dessen mittlere Teilchengröße bei 0,1 μm liegt. Der erhaltene Latex wird durch Zusatz von 25 Teilen einer Emulsion, eines Copolymeren aus 96 Teilen Ethylacrylat und 4 Teilen Methacrylsäureamid mit einem Feststoffgehalt von 10 Gewichtsteilen

0074051

agglomeriert, wobei ein Polybutadienlatex mit einer mittleren Teilchengröße von 0,35 um entstand. Nach Zusetzen von 40 Teilen Wasser, 0,4 Teilen Na-$C_{14}$-Alkylsulfonat und 0,2 Teilen Kaliumperoxidsulfat wurden 48 Teile einer Mischung aus Styrol und Acrylnitril im Verhältnis von 70 : 30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

Pfropfpolymerisat (C)

In einem Rührautoklaven, der 150 Teile destilliertes Wasser, einen Teil Na-$C_{14}$-Alkylsulfonat, 0,2 Teile Kaliumperoxodisulfat, 0,2 Teile Natriumyrophosphat und 0,4 Teile tert. Dodecylmercaptan enthält, wird der Inhalt auf 65°C erhitzt. Danach werden 10 Teile Butadien und 10 Teile Butylacrylat zugegeben und für die Dauer von 1 Stunde gerührt. Im Anschluß daran wird im Verlauf von 6 Stunden ein Gemisch aus 20 Teilen Butadien und 35 Teilen Butylacrylat kontinuierlich zugesetzt. Danach wird für die Dauer von 2 Stunden weiter polymerisiert und anschließend der Rührautoklav entspannt. Die erhaltene Polymerdispersion, die einen Feststoffgehalt von 33 % hat, zeichnet sich durch eine enge Teilchengrößenverteilung aus, wobei ein mittlerer Teilchengrößendurchmesser von 0,08 um vorliegt.

Der erhaltene Latex wurde durch Zusatz von 30 Teilen einer Emulsion, eines Copolymeren aus 96 Teilen Ethylacrylat und 4 Teilen Methacrylsäureamid mit einem Feststoffgehalt von 10 Gewichtsteilen agglomeriert, wobei ein Latex mit einer mittleren Teilchengröße von 0,3 um entstand.

0074051

Nach Zusatz von 0,1 Teilen Kaliumperoxodisulfat wurde diese Dispersion mit einer Mischung aus 27,5 Teilen Styrol/Acrylnitril im Mischungsverhältnis 70 : 30 im Verlauf von 2 Stunden versetzt. Danach wurde weiterhin für die Dauer von einer Stunde polymerisiert. Der Umsatz, bezogen auf Styrol/Acrylnitril, lag über 99 %.

Die Aufarbeitung des erhaltenen Pfropfpolymerisates erfolgte, wie unter Pfropfpolymerisat (B) beschrieben.

Die Erfindung wird durch die nachfolgenden Beispiele näher erläutert. Die in den Beispielen genannten Teile und Prozente beziehen sich, sofern nicht anders angegeben, auf das Gewicht.

Aus jeweils 67 Teilen der Hartkomponente und unterschiedlichen Teilen der Pfropfmischpolymerisate (B) und (C), 0,2 Teilen eines phenolischen Antioxidans und 4 Teilen eines Pigmentfarbstoffs wird auf einem Mischextruder eine Granulatmischung hergestellt.

Beispiele 1 bis 8

Die Mischungsverhältnisse der Komponenten (A), (B) und (C) sind in der nachstehenden Tabelle 1 angegeben.

Zur Ermittlung der Eigenfarbe wurde der Yellowness-Index gemessen. Außerdem wurden die Kerbschlagzähigkeiten bestimmt. Die erhaltenen Werte sind zusammen mit denen der Werte für die Vergleichsproben I und II in der Tabelle 2 aufgeführt.

Tabelle 1 - Zusammensetzung der Formmasse

| Beispiel (erfindungsgemäß) | Hartkomponente (A) | | | | Pfropfmischpolymerisat (B) | | | | |
|---|---|---|---|---|---|---|---|---|---|
| | Styrol [Tle] | Acrylnitril [Tle] | Viskositätszahl | Teile in der Mischung | Kautschuk [Tle] | $d_{50}$ [um] (agglom. Kautschuk) | Pfropfgrad | Teile Acrylnitril in d. Pfropfhülle | Teile in der Mischung |
| 1 | 65 | 35 | 55 | 67 | 55 | 0,35 | 45 | 30 | 18 |
| 2 | 65 | 35 | 80/55 (1:2) | 67 | 55 | 0,35 | 45 | 30 | 18 |
| 3 | 65 | 35 | 55 | 67 | 55 | 0,35 | 45 | 30 | 13 |
| 4 | 65 | 35 | 55 | 67 | 55 | 0,35 | 45 | 30 | 20 |
| 5 | 65 | 35 | 55 | 67 | 55 | 0,35 | 45 | 30 | 23 |
| 6 | 65 | 35 | 55 | 67 | 55 | 0,35 | 45 | 30 | 10 |
| 7 | 75 | 25 | 80 | 67 | 55 | 0,35 | 45 | 30 | 18 |
| 8 | 65 | 35 | 80 | 67 | 55 | 0,35 | 45 | 30 | 18 |
| Vergleichsversuch | | | | | | | | | |
| I | 65 | 35 | 80/55 (1:2) | 67 | 55 | 0,35 | 45 | 30 | 18 |
| II | 65 | 35 | 80/55 (1:2) | 67 | 55 | 0,35 | 45 | 30 | 18 |

(Tabelle 1 - Fortsetzung)

| Beispiel (erfindungs-gemäß) | Pfropfmischpolymerisat (C) | | | | | | | |
|---|---|---|---|---|---|---|---|---|
| | Kautschuk [Tle] | $d_{50}$ [/um] Kautschuk | Butadien [Tle] | Butyl-acrylat [Tle] | Vinylme-thylether [Tle] | Pfropfgrad | Teile Acrylni-tril in d. Pfropf-hülle | Teile in d. Mi-schung |
| 1 | 75 | 0,3 | 40 | 60 | 0 | 25 | 30 | 15 |
| 2 | 75 | 0,3 | 40 | 60 | 0 | 25 | 30 | 15 |
| 3 | 75 | 0,3 | 40 | 60 | 0 | 25 | 30 | 20 |
| 4 | 75 | 0,3 | 40 | 60 | 0 | 25 | 30 | 13 |
| 5 | 75 | 0,3 | 40 | 60 | 0 | 25 | 30 | 10 |
| 6 | 75 | 0,3 | 40 | 60 | 0 | 25 | 30 | 23 |
| 7 | 75 | 0,3 | 40 | 60 | 0 | 25 | 30 | 15 |
| 8 | 75 | 0,3 | 40 | 60 | 0 | 25 | 30 | 15 |
| Vergleichs-versuch | | | | | | | | |
| I | 75 | 0,08 | 40 | 56 | 0 | 25 | 30 | 15 |
| II | 75 | 0,08 | 40 | 56 | 4 | 25 | 30 | 15 |

Tabelle 2

Kerbschlagzähigkeit und Yellowness-Index

| Beispiel | Kerbschlagzähigkeit $[kJ/m^2]$ | | Yellowness-Index |
|---|---|---|---|
| | 23°C | -40°C | |
| 1 | 16 | 4 | 2 |
| 2 | 17 | 5 | 3 |
| 3 | 16 | 3 | 3 |
| 4 | 17 | 4 | 4 |
| 5 | 18 | 5 | 4 |
| 6 | 15 | 3 | 2 |
| 7 | 17 | 4 | 4 |
| 8 | 18 | 5 | 4 |
| Vergleichs-versuche | | | |
| I | 12 | 2 | 10 |
| II | 14 | 2 | 6 |

Vergleichsversuche I und II

Die Vergleichsversuche wurden nach der Lehre der
DE-OS 28 46 754 durchgeführt.

<u>Patentansprüche</u>

1. Thermoplastische Formmasse, bestehend aus

(A) einer Hartkomponente in einem Anteil von 50 bis 90 Gew.%, bezogen auf A + B + C, aus einem oder mehreren Copolymerisaten von Styrol und/oder $\alpha$-Methylstyrol mit Acrylnitril, wobei diese Copolymerisate 20 bis 40 Gew.% Acrylnitril einpolymerisiert enthalten,

(B) mindestens einem Pfropfmischpolymerisat in einem Anteil von 5 bis 45 Gew.%, bezogen auf A + B + C, das gebildet wird aus

($B_1$) 40 bis 80 Gew.%, bezogen auf (B), eines Butadienpolymerisates mit einer mittleren Teilchengröße von 0,20 bis 0,5 $\mu$m ($d_{50}$-Wert der integralen Massenverteilung) als Pfropfgrundlage, worauf

($B_2$) 20 bis 60 Gew.%, bezogen auf (B), einer Mischung von Styrol und Acrylnitril im Gewichtsverhältnis 75 : 25 bis 65 : 35 aufgepfropft ist,

(C) mindestens einem weiteren, getrennt hergestellten Pfropfmischpolymerisat in einem Anteil von 5 bis 45 Gew.%, bezogen auf A + B + C, das gebildet wird aus

(C_1) 50 bis 85 Gew.%, bezogen auf (C) eines Copolymerisats, das gebildet wird aus 20 bis 80 Gew.% Acrylsäurebutylester und/oder Acrylsäureethylhexylester und 20 bis 80 Gew.% Butadien mit einer mittleren Teilchengröße $> 0,25$ µm ($d_{50}$-Wert der integralen Massenverteilung) worauf

(C_2) 15 bis 50 Gew.%, bezogen auf (C), einer Mischung von Styrol und Acrylnitril im Gewichtsverhältnis 75 : 25 bis 65 : 35 aufgepfropft ist.

2.  Formmasse nach Anspruch 1, dadurch gekennzeichnet, daß sie als weitere Komponente (D) übliche Zusatzstoffe in wirksamen Mengen enthält.

3.  Verwendung der Formmasse nach Anspruch 1 zur Herstellung von Formkörpern oder Formteilen.

4.  Formkörper oder Formteile, hergestellt durch Spritzgußverarbeitung aus Formmassen gemäß Anspruch 1.

**EUROPÄISCHER RECHERCHENBERICHT**

| | **EINSCHLÄGIGE DOKUMENTE** | | EP 82107953.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A1 - 2 901 576 (BASF)<br><br>* Gesamt, insbesondere An-<br>sprüche *<br><br>-- | 1-4 | C 08 L 25/12<br>C 08 L 51/04<br>C 08 L 55/02 |
| A | DE - A1 - 3 018 591 (COSDEN)<br><br>* Ansprüche *<br><br>-- | 1 | |
| D,A | DE - A1 - 2 846 754 (BASF)<br><br>* Ansprüche *<br><br>---- | 1 | |

| RECHERCHIERTE SACHGEBIETE (Int. Cl. ³) |
|---|
| C 08 L 55/00 |
| C 08 L 51/00 |
| C 08 L 25/00 |

X  Der vorliegende Recherchenbericht wurde für alle Patentansprüche erstellt.

| Recherchenort | Abschlußdatum der Recherche | Prüfer |
|---|---|---|
| WIEN | 24-11-1982 | TENGLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82